# EUROPEAN PATENT APPLICATION

(11) **EP 1 865 710 A1**
(43) Date of publication of application: **12.12.2007**
(21) Application number: 06730283.6
(22) Date of filing: 28.03.2006
(51) Int. Cl.: H04N 5/21, G09G 3/20

(54) **IMAGE SIGNAL PROCESSING APPARATUS, IMAGE SYSTEM, AND IMAGE SIGNAL PROCESSING METHOD**

(30) Priority: 30.03.2005 JP 2005098869
(71) Applicant: Pioneer Corporation, Tokyo 153-8654 (JP)
(72) Inventor: TAKATORI, Yuji Pioneer Corporation, Kawagoe Plant, Saitama 3350-8555 (JP); OCHI, Junya Pioneer Corporation, Kawagoe Plant, Saitama 3350-8555 (JP); NAKANE, Masao Pioneer Corporation, Kawagoe Plants, Saitama 33350-8555 (JP)
(74) Representative: HOFFMANN EITLE
(86) International application number: PCT/JP2006/306335
(87) International publication number: WO 2006/106688

(57) **Abstract**

An image-signal processing device (50) is an image-signal processing device that receives an input of an analog signal including a display interval including an image signal and a non-display interval not including the image signal, performs image processing on the analog signal, and outputs the image-processed analog signal to control image distortion (a line on a boundary appearing as a result of noise occurring and not occurring) occurring when a frequency of a horizontal synchronizing signal changes. The image-signal processing device (50) includes a pseudo image-signal superimposing unit (an image processing unit (15), a memory (17), a control unit (19), and a display control unit (21) that superimposes the pseudo image signal onto the non-display interval.

## Description

### TECHNICAL FIELD

The present invention relates to an image-signal processing device that performs image processing on image data. In particular, the present invention relates to an image-signal processing device, an image system, and an image-signal processing method. When the image data on which the image processing has been performed is displayed on a screen, the image-signal processing device can control image distortion caused by noise. The image system includes the image-signal processing device. The image-signal processing method is used by the image-signal processing device.

### BACKGROUND ART

Conventionally, there is a data conversion process technology in which, for example, image data in a quarter video graphics array (QVGA) image format, output from an image output device, is image-processed and displayed on a liquid crystal display of a video graphics array (VGA) display device.

In a data conversion process performed between image data having differing resolutions, such as that described above, image processing can be performed in which the QVGA image format is converted to an enlarged image format larger than the QVGA, such as the VGA. The image processing performed between such image formats having differing resolutions is actualized by synchronizing frequency being changed and, furthermore, by interpolation being performed (see, for example, Patent Document 1)

Patent Document 1: Japanese Patent Application Laid-open No. 2004-140613

### DISCLOSURE OF INVENTION

### PROBLEM TO BE SOLVED BY THE INVENTION

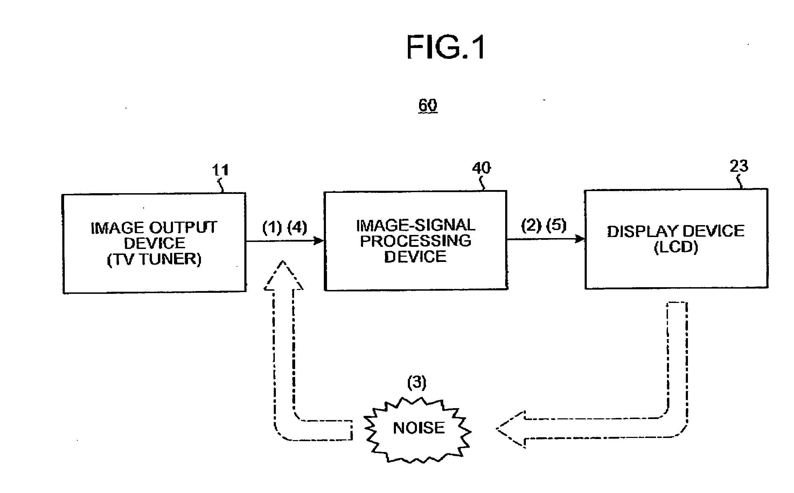

However, for example, when a frequency conversion such as that described above is performed, following problems occur. Fig. 1 is a schematic diagram explaining how noise occurs in an input analog signal in a conventional image system. An image system 60 includes an image output device 11, an image-signal processing device 40, and a display device 23. The image output device 11 outputs image data that is an analog QVGA signal. The image-signal processing device 40 receives an input of the analog signal output from the image output device 11 and performs image processing to convert the analog signal into a VGA signal. The display device 23 receives an input of the image data signal image-processed by the image-signal processing device 40 and displays the image data signal on a screen as an image. The image output device 11 is, for example, a television tuner outputting the image data that is the analog QVGA signal. The display device 23 is, for example, a liquid crystal display including a VGA screen.

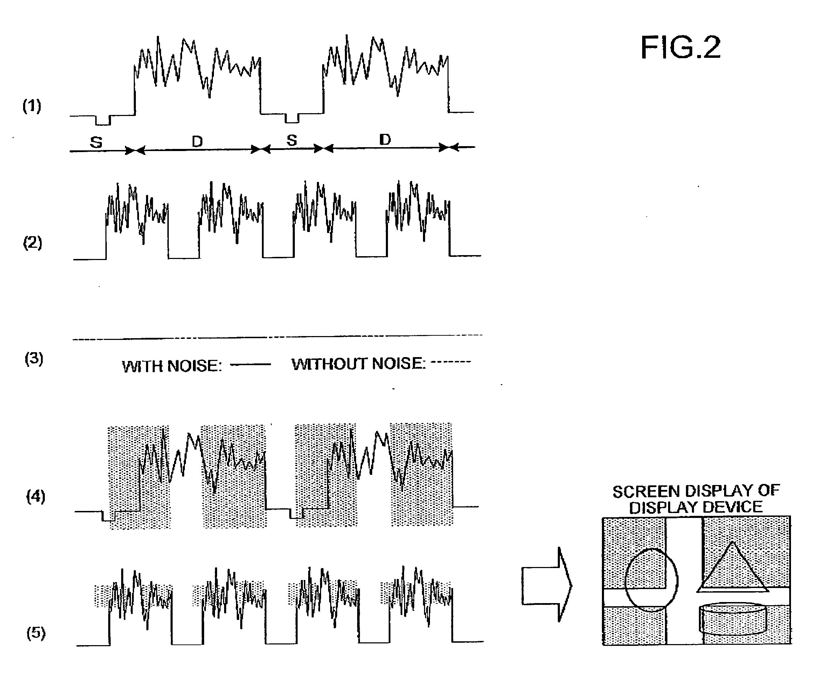

Fig. 2 is a diagram of when timings of signals input to and output from each device in the image system, shown in Fig. 1, match. Numbers assigned to each signal correspond with numbers shown in Fig. 1. In Fig. 1 and Fig. 2, an analog signal (1) of an image output from the image output device 11 is an intermittent analog signal including a display interval D and a non-display interval S. The display interval D includes an image signal that is a display subject. The non-display interval S includes a signal other than the image signal that is not the display subject, such as a horizontal synchronizing signal.

The image-signal processing device 40 that has received the input of the analog signal (1) converts a frequency of the analog signal (1) and outputs an analog signal (2). A frequency of the QVGA signal is about 15 kilohertz, while a frequency of the VGA signal is about 32 kilohertz, which means that the frequency is approximately doubled. The analog signal (2) is input into the display device 23 and displayed on the liquid crystal display or the like. When the display device 23 converts the analog signal (2) to an image, radiation noise (3) occurs. The radiation noise occurs, for example, between an image conversion processing IC (not shown) in the image-signal processing device 40 and a liquid crystal screen displaying circuit (not shown) in the display device 23.

Regarding a timing at which the radiation noise occurs, the radiation noise occurs only at a certain time in the image signal. Therefore, the radiation noise occurs, for example, during an interval such as that indicated by (3) in Fig. 2. The radiation noise (3) is transmitted over a space between a substrate (not shown) and a circuit (not shown) and invades an analog circuit. The radiation noise (3) is included in, for example, the analog signal (2) input into the image-signal processing device 40. This state is shown in (4) in Fig. 2. The image-signal processing device 40 performs image conversion on an analog signal (4) including the radiation noise and outputs the converted analog signal (4). Therefore, the signal becomes an analog signal such as that shown in (5) in Fig. 2.

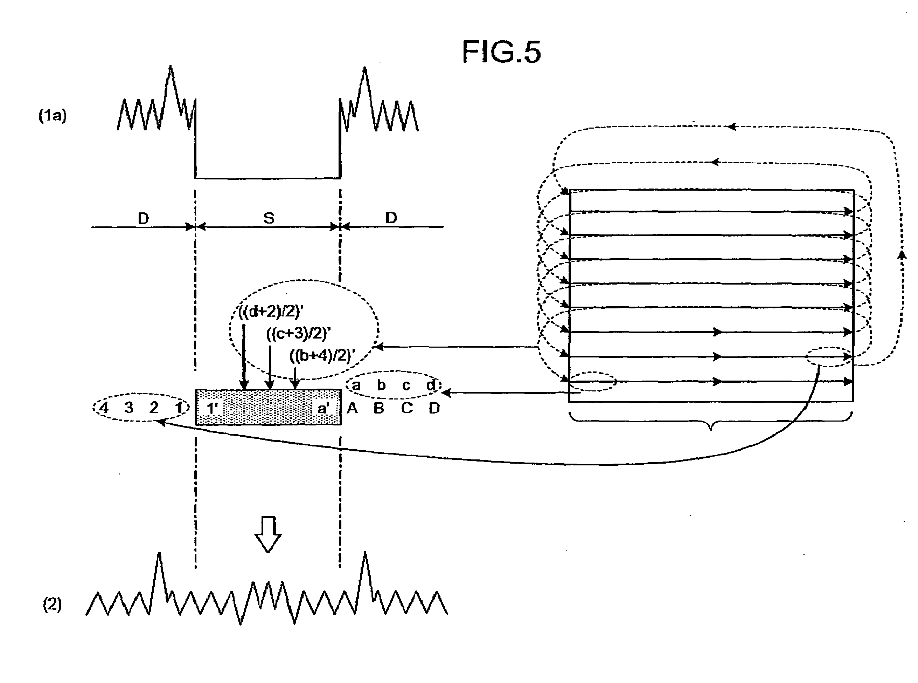

In the image displayed by the display device 23 receiving the input of the analog signal shown in Fig. 5, a boundary between a portion that includes the noise and a portion that does not include the noise is pronounced, because of an effect of the intermittent radiation noise. As a result, the portion that does not include the noise appears as a band-shaped stripe running in a vertical direction on the screen. The analog signal input into the display device 23 includes a non-display interval including a vertical synchronizing signal, in addition to the above-described non-display interval including the horizontal synchronizing signal. Therefore, a stripe appears on the screen in a horizontal direction, for the same reason. Vertical stripes and horizontal stripes annoy viewers. Therefore, modification is desired.

Conventionally, as a method for canceling the noise, a method is proposed in which, for example, a physical shield is provided between a liquid crystal screen displaying circuit in the display device 23 in which the noise occurs and an analog circuit in the image-signal processing device 40 to separate the liquid crystal screen displaying circuit and the analog circuit. However, this method of providing the physical layer runs counter to size reduction and cost reduction.

At the same time, an arrangement in which the noise does not occur can be sought by circuit patterns formed on the substrate and component arrangement being changed in various ways. However, design and design modifications are difficult to achieve and are unreliable. Therefore, the method is unsuitable for use in a manufacturing process of an actual product. Hiding the stripes caused by the noise in an area that does not appear on the screen is also considered. However, the frequency may be arbitrarily converted during image conversion. Therefore, identification of an interval at which the noise occurs is technically difficult.

The present invention has been achieved in light of the above-described issues. An object of the present invention is to provide an image-signal processing device that can control image distortion, an image system, and an image-signal processing method. The image distortion occurs when a frequency of a horizontal synchronizing signal changes depending on a change in image format and the like, when an analog signal including a display interval and a non-display interval is displayed. The display interval includes an image signal that is a display subject. The non-display interval includes a signal other than the image signal that is not the display subject, such as a horizontal synchronizing signal.

### MEANS FOR SOLVING PROBLEM

To solve the above problems and to achieve the object, an image-signal processing device according to claim 1 of the present invention receives an input of an analog signal including a display interval including an image signal to be displayed and a non-display interval including a signal not to be displayed other than the image signal, performs an image processing on the analog signal, and outputs an image-processed analog signal. The image-signal processing device includes a pseudo image-signal superimposing unit that superimposes a pseudo image' signal onto the non-display interval.

An image system according to claim 6 of the present invention includes an image output device that outputs an analog signal including a display interval including an image signal to be displayed and a non-display interval including a signal not to be displayed other than the image signal; an image-signal processing device that receives an input of the analog signal, performs an image processing on the analog signal, and outputs an image-processed analog signal; and a display device that receives an input of the image-processed analog signal output from the image-signal processing device and displays the image signal on a screen. The image-signal processing device includes a pseudo image-signal superimposing unit that superimposes a pseudo image signal onto the non-display interval of the analog signal.

An image-signal processing method according to claim 11 of the present invention is for receiving receives an input of an analog signal including a display interval including an image signal to be displayed and a non-display interval including a signal not to be displayed other than the image signal, performing an image processing on the analog signal, and outputting an image-processed analog signal. The image-signal processing method includes superimposing a pseudo image signal onto the non-display interval.

### BRIEF DESCRIPTION OF DRAWINGS

[Fig. 1] Fig. 1 is a schematic diagram explaining how noise occurs in an input analog signal in a conventional image system.
[Fig. 2] Fig. 2 is a diagram of when timings of signals input to and output from each device in the image system, shown in Fig. 1, match.
[Fig. 3] Fig. 3 is a schematic diagram of an image system according to a first example of the present invention.
[Fig. 4] Fig. 4 is a flowchart of an operation for image processing and pseudo image signal generation performed by an image-signal processing device in the image system according to the first example of present invention.
[Fig. 5] Fig. 5 is an explanatory diagram explaining an example of the generation of the pseudo image signal that enables a noise boundary to become unnoticeable, performed by a display control unit of the image-signal processing device in the image system according to the first example of the present invention.
[Fig. 6] Fig. 6 is an explanatory diagram explaining another example of the generation of the pseudo image signal that enables a boundary of noise to become unnoticeable, performed by the display control unit of the image-signal processing device in the image system according to the first example of the present invention.
[Fig. 7] Fig. 7 is a diagram of when timings of signals input to and output from each device in the image system, shown in Fig. 1, match.
[Fig. 8] Fig. 8 is a diagram explaining an imaging system according to a second example of the invention and a diagram of a comparison between an input signal and an output signal of an image-signal processing device and those of a conventional image-signal processing device.
[Fig. 9] Fig. 9 is a diagram explaining an imaging system according to a third example of the invention and a diagram of a comparison between an input signal and an output signal of an image-signal processing device and those of a conventional image-signal processing device.
[Fig. 10] Fig. 10 is a diagram explaining an imaging system according to a fourth example of the invention and a diagram of a comparison between an input signal and an output signal of an image-signal processing device and those of a conventional image-signal processing device.

### EXPLANATIONS OF LETTERS OR NUMERALS

11; image output device
13: image pre-processing unit
15: image processing unit (pseudo image-signal superimposing unit)
15a: sampling unit
15b: IP converting unit
17: memory (pseudo image-signal superimposing unit)
19: control unit (pseudo image-signal superimposing unit)
19a: judging unit (judging unit)
21: display controlling means (pseudo image-signal generating unit/pseudo image-signal superimposing unit)
23: display device
50: image-signal processing device
70: image system

### BEST MODE(S) FOR CARRYING OUT THE INVENTION

An image-signal processing device, an image system, and an image-signal processing method according to exemplary embodiments of the present invention are below described in detail with reference to the attached drawings. The present invention is not limited by the embodiments. An overview and characteristics of the image-signal processing device, the image system, and the image-signal processing method are below described as an embodiment. Subsequently, examples of the image-signal processing device, the image system, and the image-signal processing method are described.

### [First Embodiment]

An image-signal processing device according to a first embodiment receives an input of an analog signal in a predetermined image format. After performing various kinds of image processing, including frequency conversion, the image-signal processing device outputs the analog signal toward a display device. The analog signal includes a display interval and a non-display interval. The display interval includes an image signal that is a display subject. The non-display interval includes a signal other than the image signal that is not the display subject, such as a horizontal synchronizing signal. The image-signal processing device according to the embodiment includes a pseudo image-signal superimposing unit that superimposes a pseudo image signal onto the non-display interval.

In other words, the image-signal processing device according to the embodiment does not eliminate noise. The image-signal processing device superimposes the pseudo image signal onto the non-display interval. As a'result, the image-signal processing device generates noise in the non-display interval that does not include the image signal, in a same way as in the display interval including the image signal. As a result of the configuration, a difference between the noise occurring in the display interval and the noise occurring in the non-display interval is reduced. An image that has no stripes at boundaries and does not cause annoyance can be achieved.

The pseudo image-signal superimposing unit includes a judging unit and a pseudo image-signal generating unit. The judging unit judges whether an interval is the non-display interval, The pseudo image-signal generating unit generates the pseudo image signal and superimposes the pseudo image signal onto the interval judged to be the non-display interval. As a result of the configuration, the pseudo image signal can be easily and correctly superimposed onto the non-display interval, even when the non-display interval is present in an arbitrary location. A highly reliable image-signal processing device can be achieved.

### [Second Embodiment]

An image shows various scenes. For example, a pure white surface may be imaged, and on the other hand, a diverse town scenery may be imaged. Therefore, if a uniform pseudo image signal is always superimposed onto the non-display interval, the boundary may not be effectively eliminated. Instead, the boundary may become even more noticeable. According to the embodiment, these instances are taken into consideration.

In an image-signal processing device according to the embodiment, the pseudo image-signal generating unit generates the pseudo image signal based on image signals adjacent to the non-display interval. As a result of the configuration, the pseudo image signal is generated taking into consideration the adjacent image signals. Therefore, difference between noise caused by the image signal in the non-display interval and noise caused by a pseudo image signal interval superimposed onto the non-display interval i's reduced. An image in which the boundary is further unnoticeable and that does not cause annoyance can be achieved.

### [Third Embodiment]

An image-signal processing device according to a third embodiment further eliminates the boundary, compared to the image-signal processing device according to the second embodiment. In the image-signal processing device according to the embodiment, the pseudo image-signal generating unit includes a storing unit. The storing unit temporarily stores the image signal. Based on image signals before and after the non-display interval stored in the storing unit, a pseudo image signal that is similar in size and undergoes similar changes as the image signals before and after the non-display interval is generated. As a result of the configuration, the difference in the noises can be further reduced. An image in which the boundary is further unnoticeable can be achieved.

### (Fourth Embodiment)

As is the image-signal processing device according to the third embodiment, the image-signal processing device according to a fourth embodiment also further eliminates the boundary, compared to the image-signal processing device according to the second embodiment. In the image-signal processing device according to the embodiment, the pseudo image-signal generating unit includes a storing unit. The storing unit temporarily stores the image signal. Based on image signals before and after the non-display interval stored in the storing unit, a pseudo image signal that gradually changes from the image signals before and after the non-display interval is generated. "Signal that gradually changes" refers to a signal that does not suddenly change from the image signals before and after the non-display interval. As a result of a pseudo image signal such as this being generated, the boundary can be made further unnoticeable.

### [Fifth Embodiment]

An image system according to a fifth embodiment of the invention includes an image output device, an image-signal processing device, and a display device. The image output device outputs an analog signal including a display interval and a non-display interval. The display interval includes an image signal. The non-display interval does not include the image signal. The image-signal processing device receives an input of the analog signal, performs image processing on the analog signal, and outputs the image-processed signal. The display device receives an input of the signal output from the image-signal processing device and displays the signal on a screen. The image-signal processing device includes a pseudo image-signal superimposing unit. The pseudo image-signal superimposing unit superimposes a pseudo image signal onto the non-display interval of the analog signal. As a result of the configuration, differences in size between noise in the display interval and noise in the non-display interval generated by the display device can be reduced. As a result, an image displayed by the display device that has no stripes at the boundary and does not cause annoyance.

### [Sixth Embodiment]

In an image-signal processing method according to a sixth embodiment of the invention, an input of an analog input signal including a display interval and a non-display interval is received. The display interval includes an image signal that is a display subject. The non-display interval includes a signal other than the image signal that is not the display subject. After image processing is performed on the analog input signal, the image-processed signal is output. The image-signal processing method includes a pseudo image-signal superimposing step of superimposing a pseudo image signal onto the non-displaying interval. Therefore, in a display device that displays image data to which image processing has been performed by use of the image-signal processing method, differences in size between noise in the display interval and noise in the non-display interval generated by the display device can be reduced. As a result, an image displayed by the display device that has no stripes at the boundary and does not cause annoyance.

### (First Example)

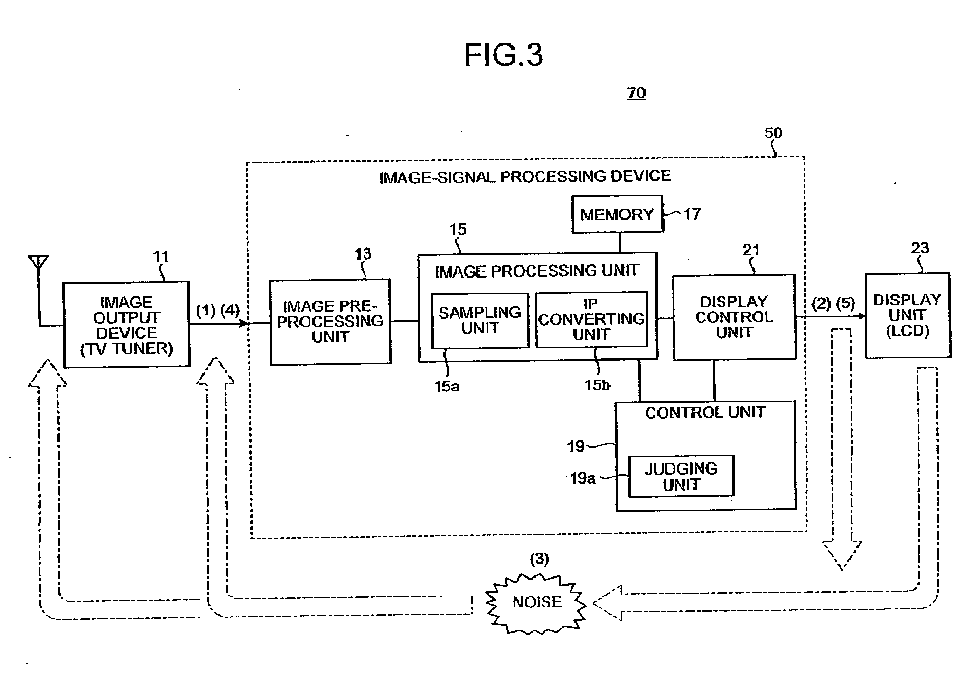

Fig. 3 is a schematic diagram of an image system according to a first example of the present invention. An image system 70 includes an image output device 11, an image-signal processing device 50, and a display device 23. The image output device 11 outputs an analog signal. The image-signal processing device 50 receives an input of the analog signal output by the image output device 11 performs image processing on the analog signal. The display device 23 receives an input of image data image-processed by the image-signal processing device 50 and displays the image data on a screen as an image.

The image-signal processing device 50 includes an image pre-processing unit 13, an image processing unit 15, a memory 17, a control unit (CPU) 19, and a display control unit 21.

The image pre-processing unit 13 converts the input analog signal to an image signal suitable for sampling. The image pre-processing unit 13 may include a low-pass filter, a synchronization separator, a composite, a component, an RGB signal converter, and the like.

The image processing unit 15 performed image processing between differing image signal formats, such as an IP conversion, an image quality conversion, and a two-screen display conversion. The image processing includes synchronous frequency change, a supplementary process, and the like. The image processing unit 15 includes a sampling unit 15a and an IP converting unit 15b. The sampling unit 15a stores the input analog signal in the memory 17. The IP converting unit 15b converts a resolution and a frequency of input data that is in QVGA format and the like to VGA format and the like. The IP converting unit 15b can also perform processes such as color adjustment, image quality adjustment, and two-screen function.

The memory 17 temporarily stores the image data when the image processing is performed. The memory 17 also accumulates data required for pseudo image signal generation.

The control unit 19 controls each functional unit and generates the pseudo image signal. The control unit 19 includes a judging unit 19a. The judging unit 19a detects the non-display interval when generating the pseudo image signal.

In the image system 70 having a configuration such as this, radiation noise (3) is generated, for example, when an analog signal (2) is t'ransmitted over a signal line from the display control unit 21 to the display device 23. The radiation noise (3) is also generated when the display device 23 converts the analog signal (2) to an image. The radiation noise (3) that is generated in this way is transmitted over a space between a substrate (not shown) and a circuit (not shown) and invades an analog circuit. The radiation noise (3) is included in, for example, an analog signal (1) input into the image-signal processing device 50. In addition, the radiation noise (3) is included on a path until a signal is input into the image output device 11.

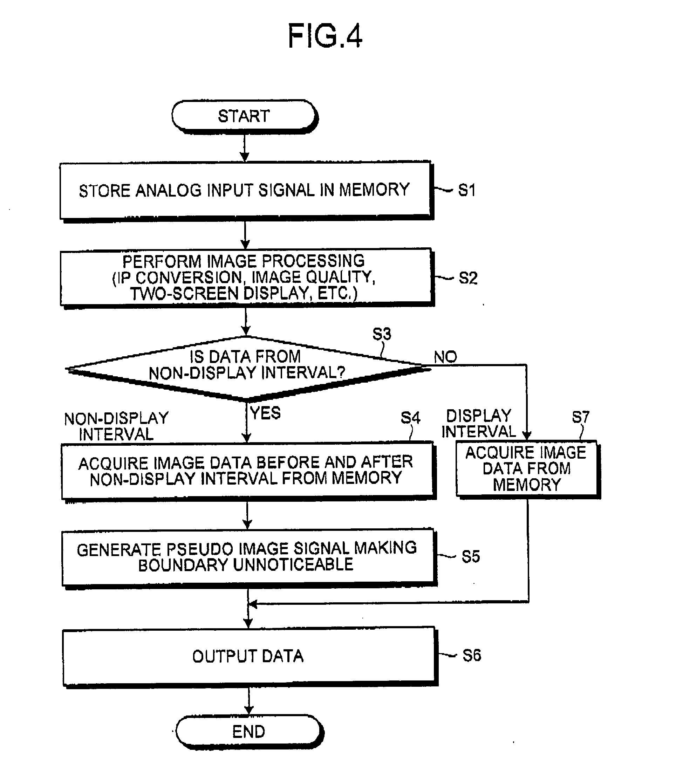

Fig. 4 is a flowchart of an operation for image processing and pseudo image signal generation performed by the image-signal processing device. First, the sampling unit 15a stores an analog signal, converted to an image signal suitable for sampling by the image pxe-processing unit 13, in the memory 17 (Step S1). Next, the image processing unit 15 performs image processing, such as the IP conversion, the image quality, and the two-screen display, on the data stored in the memory 17, using the IP converting unit 15b (Step S2).

After the image processing is completed, the control unit 19 reads the data from the memory 17 and judges whether the read data is from the non-display interval, via the judging unit 19a (Step S3). When the read data is from the non-display interval, the display control unit 21 acquires image data before and after the non-display interval from the memory 17 (Step S4). The display control unit 21 generates the pseudo image signal based on the image signal data before and after the non-display interval (Step S5). The pseudo image signal fills the non-display interval and makes a boundary between the non-display interval and the image data unnoticeable. The display control unit 21 then outputs the pseudo image data toward the display device 23 (Step S6).

At the same time, when the read data is not judged to be from the non-display interval at Step S3, the read data is judged to be from the display interval. The display control unit 21 acquires the image data from the memory 17 (Step S7), The display control unit 21 proceeds to Step S6 and outputs the image data towards the display device 23.

Here, the image processing unit 15, the memory 17, the control unit 19, and the display control unit 21 involved in the operation from Step S3 to Step S4 form the pseudo image-signal superimposing unit. The pseudo image-signal superimposing unit superimposes the pseudo image signal onto the non-display interval. Within the pseudo image-signal superimposing unit, the judging unit 19a that judges whether the data is from the non-display interval at Step S3 forms the judging unit. The display control unit 21 that generates the pseudo image signal at Step S4 and Step S5 forms the pseudo image-signal generating unit.

An operation for superimposing the pseudo image signal onto the non-display interval, performed at Step S3 to Step S4, is the pseudo image-signal superimposing step. Within the pseudo image-signal superimposing step, an operation for judging whether the data is from the non-display interval at Step S3 is a judging step. An operation for generating the pseudo image signal and superimposing the pseudo image signal onto the non-display interval at Step 4 and Step 5 is a pseudo image signal generating step.

Fig. 5 is an explanatory diagram explaining an example of the generation of the pseudo image signal that enables the boundary of noise to become unnoticeable, performed by the display control unit 21. The pseudo image signal is generated as follows. In other words, a non-display interval S including an image-processed analog signal (1)' is divided into five sections, a first section to a fifth section, at a predetermined interval. A portion of a head of a display interval D adjacent to a rear of the non-display interval S is divided into 1, 2, 3, and 4 in the diagram. The portion is divided from the non-display interval S side at a same interval. At the same time, a portion of an end of the display interval D adjacent to a front of the non-display interval S is divided into a, b, c, and d in the diagram. The portion is divided from the non-display interval side S at a same interval.

Data 1' is generated in the first section, based on data in section 1. The data 1' is generated as the pseudo image signal superimposed on the non-display interval S. Data ((d+2)/2)' is generated in a second section, based on an average of data in section d and data in section 2. Data ((c+3)/2)' is generated in a third section, based on an average of data in section c and data in section 3. Data ((b+4)/2)' is generated in a fourth section, based on an average of data in section b and data in section 4. Data a' is generated in the fifth section based on data in section a. A coefficient, such as a correlation coefficient and an interval coefficient (linear and non-linear), is multiplied with these pieces of data accordingly, and the data is used.

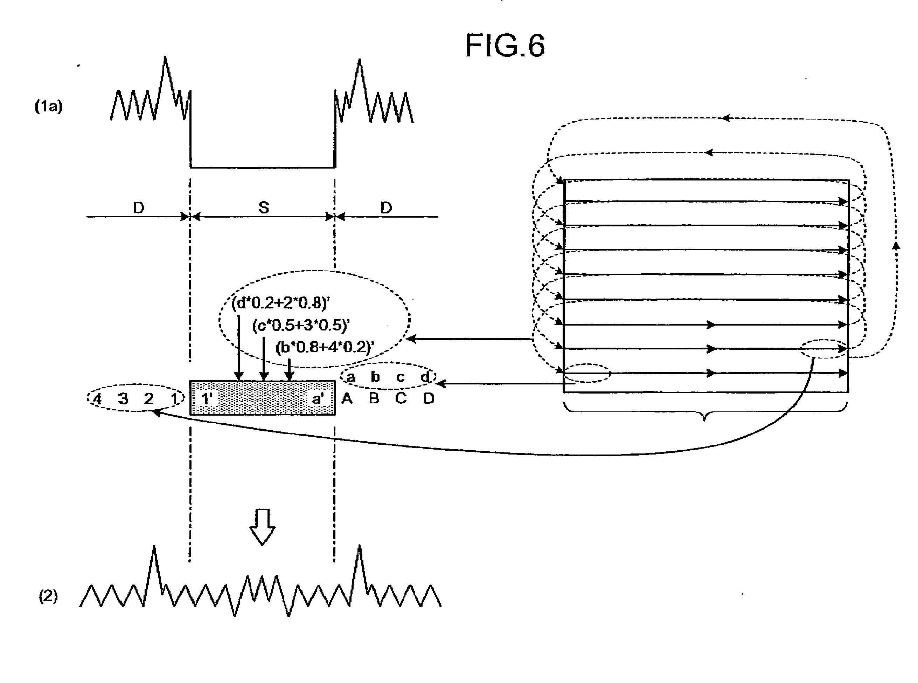

Fig. 6 is an explanatory diagram explaining another example of the generation of the pseudo image signal that enables a boundary of noise to become unnoticeable, performed by the display control unit 21.In the example, data 1' is generated in the first section, based on data in section 1. The data 1' is generated as the pseudo image signal superimposed on the non-display interval S. Data (d×0.2+2×0.8)' is generated in a second section, based on a sum of 20 percent of the data in section d and 80 percent of the data in section 2. Data (c×0.5+3×0.5)' is generated in a third section, based on a sum of 30 percent of the data in section c and 50 percent of the data in section 3. Data (b×0.8+4×0.2)' is generated in a fourth section, based on a sum of 80 percent of the data in section b and 20 percent of the data in section 4. Data a' is generated in the fifth section based on data in section a. The coefficient, such as the correlation coefficient and the interval coefficient (linear and non-linear), is multiplied with these pieces of data accordingly, and the data is used.

As a result of previous and subsequent data being synthesized and the pseudo image signal being generated in this way, a pseudo image signal that is similar in size and undergoes the similar changes as the image signals before and after the non-display interval S is generated. As a result, the difference in the noises can be reduced and an image in which the boundary is further unnoticeable can be received.

A method of generating the pseudo image signal is not limited to that described above. A pseudo image signal that smoothly connects a front end of image data adjacent to the rear of the non-display interval S and a back end of image data adjacent to the front of the non-display interval S can be generated, based on the image signals before and after the non-display interval. In this case, as well, when the pseudo image signal is generated, the coefficient, such as the correlation coefficient and the interval coefficient (linear and non-linear), is multiplied with the data accordingly, and the data is used.

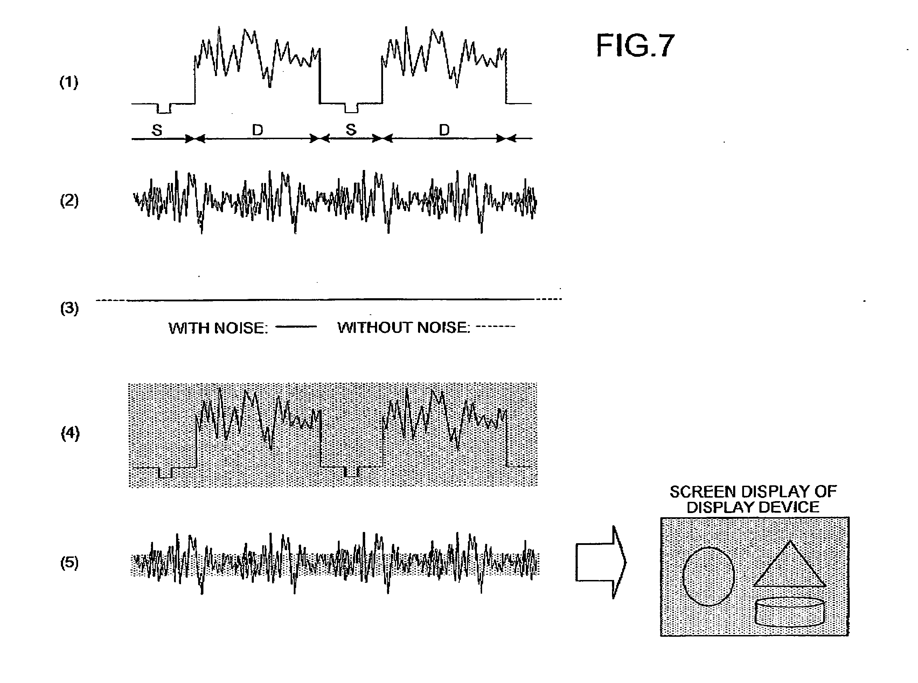

Fig. 7 is a diagram of when timings of signals input to and output from each device in the image system according to the example match. A number assigned to each signal correspond with numbers shown in Fig, 3. in Fig. 3, the analog signal (1) of the image output from the image output device 11 is an intermittent analog signal including the display interval D and the non-display interval S, as is conventionally. The display interval D includes the image signal that is the display subject. The non-display interval S includes the signal other than the image signal that is not the display subject, such as the horizontal synchronizing signal. Specifically, the non-display interval S includes the horizontal synchronizing signal and a portion from a back porch to a front porch before and after the horizontal synchronizing signal.

The image-signal processing device 50 that has received the input of the analog signal (1) performs frequency conversion on the analog signal (1) and outputs the analog signal (2). At this time, regarding the analog signal (2) output from the image-signal processing device 50 according to the example, the pseudo image signal is superimposed onto the non-display interval. Therefore, the radiation noise generated by the display device 23 occurs at a uniform timing, such as that shown in (3). The radiation noise (3) occurs in the analog signal (2) input into the image-signal processing device 50. However, as shown in (4), the radiation noise (3) according to the example occurs consecutively and uniformly. Therefore, an output signal in which the radiation noise is present is a signal in which noise occurs uniformly, such as that shown in (5) in Fig. 7. As a result, a line caused by the non-display interval does not occur in the screen displayed by the display device 23 into which the signal is input. Annoyance experienced by a viewer can be reduced.

The image output device 11 according to the example is a television tuner. However, the image output device 11 is not limited thereto. The image output device can be, for example, a main body of a navigation system.

### [Second Example]

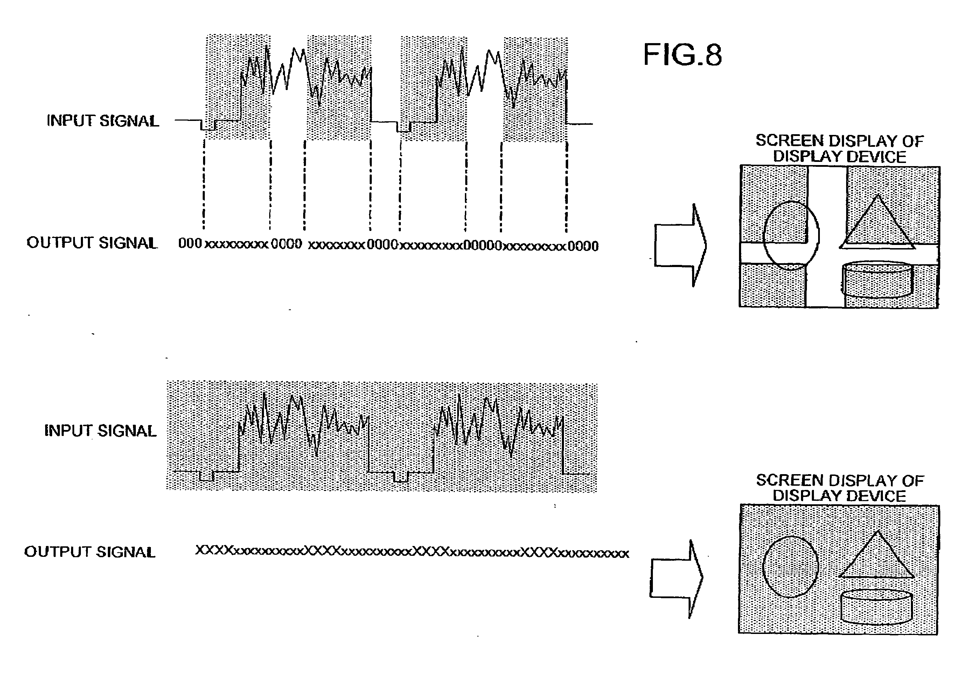

Fig. 8 is a diagram explaining an imaging system according to a second example of the invention and a diagram of a comparison between an input signal and an output signal of the image-signal processing device and those of a conventional image-signal processing device. In Fig. 8, the input signal and the output signal shown below are those according to the example. The input signal and the output signal shown above are those of the conventional image-signal processing device shown for comparison. As is clear from Fig. 8, the pseudo image signal is superimposed in a vertical synchronizing area in addition to a horizontal synchronizing area.

In the image-signal processing device according to the example, the image data is converted to a digital signal, and the digital signal is output. Even when the image data is the digital signal, the non-display interval is filled with a pseudo image signal "X". Therefore, the image displayed by the display device is uniformly affected by the noise, and the boundary does not appear as a line. On the other hand, in the conventional image-signal processing device, the image data in the non-display interval is output as "0". Therefore, the display device receiving the input of the image data and displaying the image data on the screen generates intermittent noise. The noise occurs in the input signal of the image-signal processing device. Therefore, the line caused by the non-display interval appears in the image displayed by the display device.

### [Third Example]

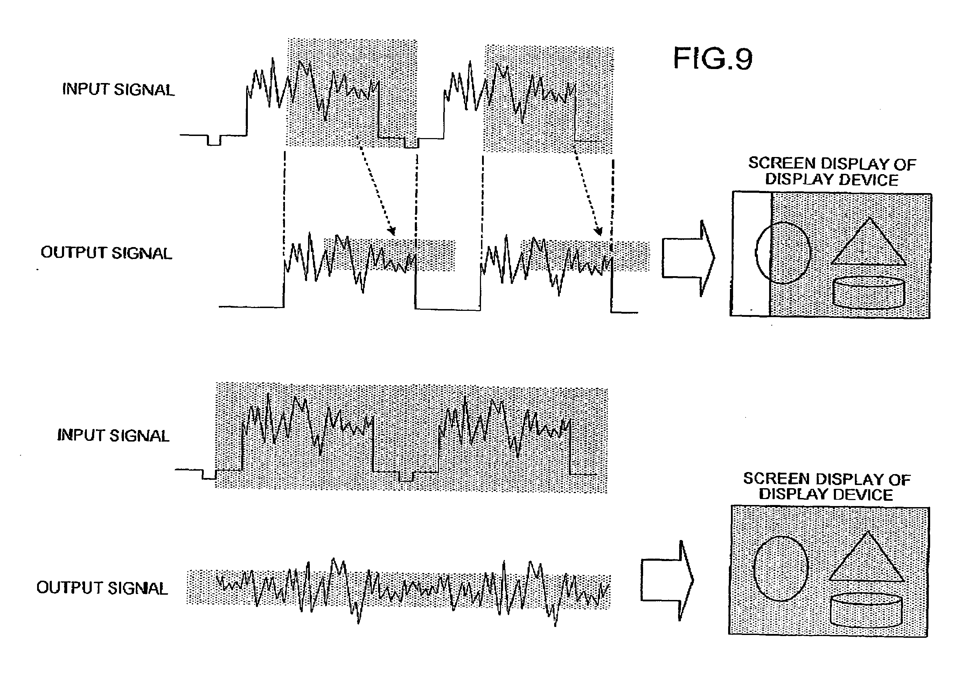

Fig. 9 is a diagram explaining an imaging system according to a third example of the invention and a diagram of a comparison between an input signal and an output signal of the image-signal processing device and those of the conventional image-signal processing device. In Fig. 9, the input signal and the output signal shown below are those according to the example. The input signal and the output signal shown above are those of the conventional image-signal processing device shown for comparison.

According to the example, the image processing performed by the image-signal processing device does not include the frequency conversion. In other words, the input signal and the output signal have a same frequency. However, phases are shifted. For example, this phenomenon occurs when the image processing is performed using a memory. In this case, the line appears in the image as a result of the noise generated when the display device displays the image data. The pseudo image signal of the present application is advantageous regarding this line, as well. The line in the image can be made unnoticeable.

### Fourth Example

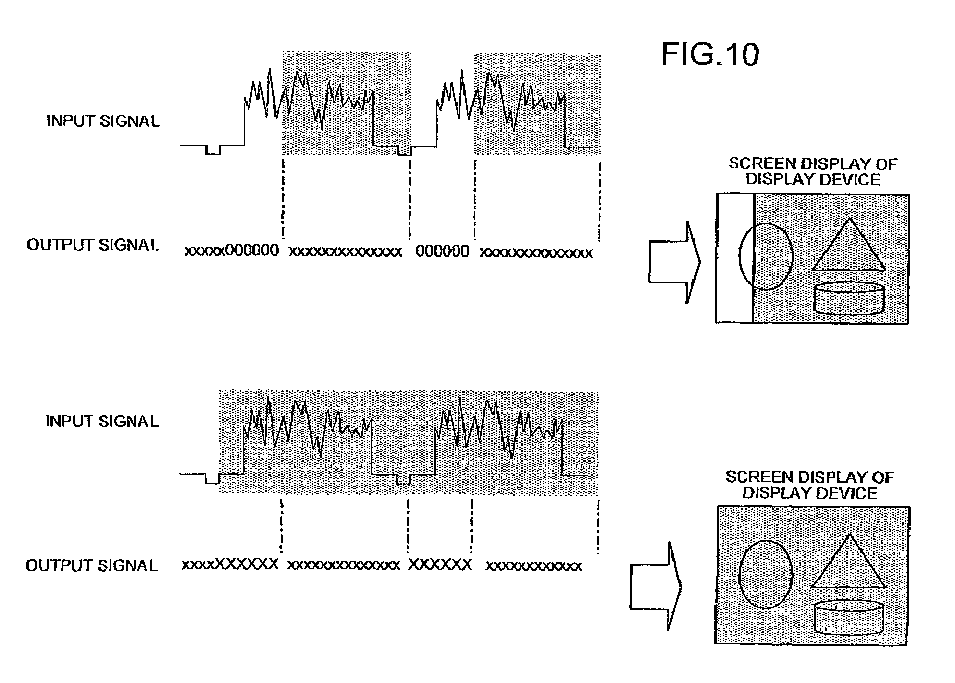

Fig. 10 is a diagram explaining an imaging system according to a fourth example of the invention and a diagram of a comparison between an input signal and an output signal of the image-signal processing device and those of the conventional image-signal processing device. In Fig. 10, the input signal and the output signal shown below are those according to the example, The input signal and the output signal shown above are those of the conventional image-signal processing device shown for comparison.

According to the third example, the phase is shifted in the analog output signal. According to the present example, the phase is shifted in a digital output signal. For the same reason as that according to the second example and the third example, the pseudo image signal of the present application is advantageous regarding this line, as well. The line in the image can be made unnoticeable.

### INDUSTRIAL APPLICABILITY

As described above, the image-signal processing device, the image system, and the image-signal processing method are useful for an image-signal processing device that performs image processing of image format conversion, including frequency conversion. In particular, the image-signal processing device, the image system, and the image-signal processing method are suitable for an image-signal processing device that outputs image-processed image data toward a display device that generates noise when displaying image data. For example, the image-signal processing device, the image system, and the image-signal processing method are suitable for an image-signal processing device that receives an input of analog image data output from a general image source device including a television tuner, a system thereof, and a main body of a navigation system, performs image processing on the analog image data, and outputs the image-processed image data to a liquid crystal display and the like.

## Claims

1. An image-signal processing device that receives an input of an analog signal including a display interval including an image signal to be displayed and a non-display interval including a signal not to be displayed other than the image signal, performs an image processing on the analog signal, and outputs an image-processed analog signal, the image-signal processing device comprising:
a pseudo image-signal superimposing unit that superimposes a pseudo image signal onto the non-display interval.

2. The image-signal processing device according to claim 1, wherein the pseudo image-signal superimposing unit includes
a judging unit that judges whether a current interval is the non-display interval, and
a pseudo image-signal generating unit that generates the pseudo image signal and superimposes the pseudo image signal onto the current interval that is judged to be the non-display interval.

3. The image-signal processing device according to claim 2, wherein the pseudo image-signal generating unit generates the pseudo image signal based on image signals adjacent to the non-display interval.

4. The image-signal processing device according to claim 3, wherein the pseudo image-signal generating unit includes a storing unit that temporarily stores therein the image signal, and generates the pseudo image signal that is of a similar size and that undergoes a similar change as the image signals before and after the non-display interval, based on the image signals before and after the non-display interval stored in the storing unit

5. The image-signal processing device according to claim 3, wherein the pseudo image-signal generating unit includes a storing unit that temporarily stores therein the image signal, and generates the pseudo image signal that gradually changes from the image signals before and after the non-display interval, based on the image signals before and after the non-display interval stored in the storing unit.

6. An image system comprising:
an image output device that outputs an analog signal including a display interval including an image signal to be displayed and a non-display interval including a signal not to be displayed other than the image signal;
an image-signal processing device that receives an input of the analog signal, performs an image processing on the analog signal, and outputs an image-processed analog signal; and
a display device that receives an input of the image-processed analog signal output from the image-signal processing device and displays the image signal on a screen, wherein
the image-signal processing device includes a pseudo image-signal superimposing unit that superimposes a pseudo image signal onto the non-display interval of the analog signal.

7. The image system according to claim 6, wherein the pseudo image-signal superimposing unit includes
a judging unit that judges whether a current interval is the non-display interval, and
a pseudo image-signal generating unit that generates the pseudo image signal and superimposes the pseudo image signal onto the current interval that is judged to be the non-display interval.

8. The image system according to claim 7, wherein the pseudo image-signal generating unit generates the pseudo image signal based on image signals adjacent to the non-display interval.

9. The image system according to claim 8, wherein the pseudo image-signal generating unit includes a storing unit that temporarily stores therein the image signal, and generates the pseudo image signal that is of a similar size and that undergoes a similar change as the image signals before and after the non-display interval, based on the image signals before and after the non-display interval stored in the storing unit

10. The image system according to claim 8, wherein the pseudo image-signal generating unit includes a storing unit that temporarily stores therein the image signal, and generates the pseudo image signal that gradually changes from the image signals before and after the non-display interval, based on the image signals before and after the non-display interval stored in the storing unit.

11. An image-signal processing method of receiving receives an input of an analog signal including a display interval including an image signal to be displayed and a non-display interval including a signal not to be displayed other than the image signal, performing an image processing on the analog signal, and outputting an image-processed analog signal, the image-signal processing method comprising:
superimposing a pseudo image signal onto the non-display interval.

12. The image-signal processing method according to claim 11, wherein the superimposing includes
judging whether a current interval is the non-display interval, and
generating the pseudo image signal and superimposing the pseudo image signal onto the non-display interval, when the current interval is judged to be the non-display interval at the judging.

13. The image-signal processing method according to claim 12, wherein the generating includes generating the pseudo image signal that is of a similar size and undergoes a similar change as the image signals before and after the non-display interval, based on the image signals before and after the non-display interval stored in advance.

14. The image-signal processing method according to claim 12, wherein the generating includes generating the pseudo image signal that gradually changes from the image signals before and after the non-display interval, based on the image signals before and after the non-display interval stored in advance.
